(19) Europäisches Patentamt
European Patent Office
Office européen des brevets

(11) EP 3 036 295 B1

(12) # EUROPEAN PATENT SPECIFICATION

(45) Date of publication and mention of the grant of the patent:
**08.04.2020 Bulletin 2020/15**

(21) Application number: **14753255.0**

(22) Date of filing: **20.08.2014**

(51) Int Cl.:
***C09D 11/033*** *(2014.01)* ***C09D 11/06*** *(2006.01)*
***C09D 11/14*** *(2006.01)*

(86) International application number:
**PCT/EP2014/067739**

(87) International publication number:
**WO 2015/024966 (26.02.2015 Gazette 2015/08)**

(54) **OFFSET PRINTING INKS COMPRISING AN ISOSORBIDE FATTY ACID ESTER SOLVENT**

DRUCKTINTEN MIT ISOSORBID-FETTSÄUREESTERLÖSEMITTEL

ENCRES D'IMPRESSION CONTENANT UN SOLVANT D'ESTER D'ACIDE GRAS D'ISOSORBIDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.08.2013 EP 13181261**

(43) Date of publication of application:
**29.06.2016 Bulletin 2016/26**

(73) Proprietor: **OLEON NV**
**9940 Ertvelde (BE)**

(72) Inventors:
- **PACKET, Dirk**
  **B-3110 Rotselaar (BE)**
- **ZITOUNI, Karima**
  **F-91420 Morangis (FR)**
- **HUYBRECHTS, Ward**
  **B-2600 Berchem (BE)**
- **NEES, Wilfried**
  **B-2160 Wommelgem (BE)**

(74) Representative: **V.O.**
**P.O. Box 87930**
**Carnegieplein 5**
**2508 DH Den Haag (NL)**

(56) References cited:
**WO-A1-2012/123267**
**US-A1- 2011 315 049**
**US-A1- 2012 276 477**
**US-A1- 2013 032 056**
**US-A1- 2013 032 057**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

FIELD OF THE INVENTION

The present invention relates to an offset printing composition vehicle, comprising a carboxylic ester solvent. The present invention also relates to an offset printing ink and an offset printing varnish comprising this offset printing composition vehicle.

BACKGROUND OF THE INVENTION

Frequently used printing techniques include offset printing and non-impact printing such as inkjet printing, but other printing processes exist as well. To meet the requirements imposed by the nature of the printing process, inks are formulated differently for each printing processes in respect of a.o. chemical composition, viscosity, drying mechanism and properties. Generally, printing inks consist of a vehicle which may be solid or liquid, and a colorant, which may be a soluble dye or an insoluble, solid pigment.

In electrophotographic imaging the image is developed using a solid toner composition. Once the image is formed and developed, it may be transferred to the substrate to be printed. Heat and pressure ensure fusion of the toner to the image-receiving medium. A process for the production of a toner typically involves the production of an emulsion by mixing a dispersion of one or more colorants, waxes and other additives with a resin and other components of the toner. Toner particles are aggregated, coalesced, optionally washed and dried and recovered. Such a composition is for example disclosed in US2012/0276477. US 2012/0276477 discloses a solid toner composition comprising a bio-based amorphous polymeric resin, at least one crystalline polyester with the diols units derived from monomers of soya oil, D-isosorbide and/or amino acids, and one or more additional ingredients selected from the group of colorants, waxes, coagulants, and combinations thereof. The polymeric ester does not function as a solvent but is rather a solid component of a solid toner composition.

In inkjet printing, an inkjet ink having a high degree of fluidity is jetted out from fine head nozzles present in the printing head. The ink is jetted out in the form of small ink droplets which are propelled on the substrate to be printed, to print a film of a thickness which is usually < 0.5 μm. This imposes marked limitations to the ink viscosity, and ink viscosity adjustment is only possible within a viscosity range in which the ink can be jetted out, often 0.01-0.1 Pa.s. Oily inkjet inks may employ one or more insoluble pigments finely dispersed in a water-insoluble solvent, or one or more dyes dissolved in a solvent component. They usually dry by penetration into the printed material such as paper or plastic foil.

An oily inkjet ink composition having the pigments dispersed in it, is for example disclosed in US2011/0315049. US2011/0315049 employs as a solvent a mixture of a 20 to 50 wt% of a hydrocarbon type solvent A with a low polarity and 1 to 40 wt% of a high polarity solvent B having at least an ester group and an ether group in the molecule, for example isosorbide dicaprylate, which exhibits good wettability with respect to paper. By the presence of both solvents A and B, solvent separation from the ink becomes quick and depending on the polarity of the paper, ink penetrability of one of the solvents may be enhanced with respect to various types of paper, i.e. paper having a high as well as a low polarity. US2011/0315049 does not disclose to alter the ink viscosity, but rather teaches to enhance the ink penetrability by a proper selection of the components of the solvent composition. To achieve compatibility of solvents A and B and improve the storage stability of the ink, a higher fatty acid ester for example methyl soybean oil may be added as a solvent C that is soluble in both solvent A and B. US2011/0315049 is however silent on the wetting power of the solvent for the pigments or dyes contained in the ink. Further, US 2011/0315049 does not describe a solvent composition having as main ingredient, thus more than 50 wt%, of isosorbide ester.

Phase change type inkjet inks are solid at ambient temperature, but exists in the liquid phase at the elevated operating temperature of the inkjet printing device. The droplets immediately solidify upon contact with the substrate, so that ink migration along the printing medium is prevented and dot quality is improved. US2013/0032056 discloses such a phase change ink. The solid phase change ink disclosed in US2013/0032056 comprises an ink carrier comprising 5-35 wt. % of an amorphous oligomer of isosorbide and a diacid, hence a polymeric compound containing at least several isosorbide units, which is used in combination with a colorant, such as a dye, pigment or mixture thereof. Also US 2013/0032057 discloses a solid ink composition containing at least one solid amorphous component derived from a polyol, hence again a polymeric compound.

WO 2012/12367 relates to (partly) bio-based co-polyesters suitable for use in latex compositions. The co-polyester is produced by a copolymerization of a first diol ebing an iso-hexide, for example isosorbide, a cyclic dicarboxylic acid and a (second) aliphatic diol.

As can be understood from the above, the type and composition of the components of a printing ink may differ significantly, depending on the nature of the printing process and the substrate which is to be printed.

Offset printing is largely used for paper and board applications, and mainly employs a two-fluid system of a

viscous, pasty ink hydrophobic by nature and a hydrophilic fountain solution. Rollers capture a thin ink film and ensure ink transport to the printing plate. The hydrophilic non-image areas on the printing plate are wetted with an aqueous fountain solution, whereas the inks are transferred to the hydrophobic image areas. To guarantee a proper ink flow by the transport system, the inks have a high viscosity. Because of the temperature in the inking unit (approximately 25-40°C), the solvents present in the inks must have a high boiling point to minimise the risk to evaporation as the ink is transported through the system.

Offset printing inks are well known in the art as well as their use for the printing of a wide variety of substrates. An offset printing ink generally comprises one or more pigments or dyes and a carrier or vehicle. The carrier or vehicle is the liquid that forms the base of any ink. It binds the pigment to the printed surface, provides the printability of the ink and wets the pigment particles. The vehicle usually contains a resin binder, one or more solvents for the binder and one or more additives for example drying and chelating agents to control the printing properties of the ink, a plasticizer, an anti-oxidant and other functional ingredients. The solvent present in the vehicle should keep the ink liquid from when it is applied to the printing surface until when it has been transferred to the surface to be printed. Offset printing inks used in sheet-fed offset lithography have typical viscosities of 10-100 Pa.s, those used in heat-set offset lithography have typical viscosities of 20-75 Pa.s.

In a conventional offset printing ink producing process the vehicle is made first, then the pigments are mixed into it. Pigment addition is however often associated with clump formation, and in order to achieve uniform pigment dispersion throughout the resin, these clumps must be broken.

Drying of an offset printed ink on a substrate may occur via any or a combination of the following processes: (1) oxidation of a drying oil present in the solvent, (2) radiation curing, (3) evaporation of a volatile solvent, (4) penetration by mass transfer of the ink into the material on which the ink composition is applied leaving dry ink on the surface, and (5) precipitation induced by a sudden increase in diluent concentration which causes a sharp decrease of the solubility. The ability of the ink to penetrate into the substrate, which may for instance be a packaging material, is referred to as the migration potential. A high migration potential may be considered allowable or undesirable, depending on the application, the governing legislation, and in the case of packaging also the nature of the material to be packaged.

Many solvents may produce an undesired odour and may be considered toxic. This imparts severe restrictions on the nature of the solvents which may be used in printing inks, especially where the printed material is a primary packaging for packing food, i.e. a packaging whereby the food is in direct contact with the inside of the packaging material which is carrying a print on the outside, which creates the risk that the solvent contacts the food. Over the years, increasing efforts have been undertaken to develop printing inks with improved properties in relation to the odour release by the printing ink and to the contamination of the goods packaged by printed packaging material. Purpose of these efforts was typically to minimise the migration of those ink components which are considered unhealthy, into the packaged goods. In addition to contaminating the packaged food, migration of ink components into the packaging material may cause unwanted swelling, thereby possibly affecting the integrity of any thin plastic films which may be part of the substrate, by irreversible warping and wrinkling.

Solvents for offset printing inks with a low migration potential are for example disclosed in US 6613813. The solvents disclosed in US 6613813 comprise a water-insoluble fatty acid ester of a multivalent alcohol having a high steric spatial requirement, with a saturated or unsaturated fatty acid having a carbon chain comprising from 6 to 26 carbon atoms. Examples of suitable fatty acids include octadecene acid, linoleic acid, linolenic acid, eleostearic acid, tetradecanoic acid, hexadecanoic acid, octadecanoic acid, arachic acid, dodecanoic acid, hexanoic acid, octanoic acid, decanoic acid, and docosenoic acid. Examples of suitable multivalent alcohols include trimethylolpropane, pentaerythritol, dipentaerythritol, sorbitol and 2-butyl-2-ethyl-1,3-propanediol. The multivalent alcohols may be completely or incompletely esterified. Examples of suitable printing inks respectively comprise 56.6 wt.% pentaerythritol tetraoleate, 45.3 wt.% trimethylolpropane tricapryl/caprate and 56.5 wt.% pentaerythritol tetraisostearate.

US 2010/0184896 also discloses low odour, low taste offset printing inks, with a low migration and odour producing potential, which are particularly suitable for use in the sector of food packaging. The solvents contained in the printing ink are distinguished by a low inherent viscosity, poor migration, poor swelling properties, a high dissolving power for solid resins used in offset printing and good absorption behaviour. The solvent consists of a polyhydric alcohol which has been fully or partially esterified with a saturated or unsaturated C6-C26 fatty acid to obtain a sterically hindered ester, whereby the steric dimensions of the ester vary from 2 to 7 and the steric volume varies from 1 to 21 nm. Suitable polyhydric alcohols include 1,2-propylene glycol, dipropylene glycol, tripropylene glycol, triethylene glycol, glycerol, trimethylolpropane, neopentyl glycol, 2-methylpropane-1,3-diol, 1,4-butanediol, 1,6-hexanediol, 1,4-cyclohexanediol, 2-methyl-pentane-2,4-diol, 2-ethylhexane-1,3-diol, 2,2,4-trimethyl-1,3-pentanediol, 1,3-cyclohexane dimethanol, 1,4-cyclohexane dimethanol and hydroxypivalyl hydroxy-pivalate. The fatty acid esters may be used individually or as a mixture. The kinematic viscosity of the fatty acid esters ranges from 20 mPa.s to 500 mPa.s, their acid number is less than 10 mg KOH/g, their iodine number is between 0 to 150, their molecular weight is at least 500, in particular 550 - 1000, their Kauri-butanol value is quick low, meaning that their ability to act as a solvent is quite low ranges from 25 to 70. The exemplified printing inks in US 2010/0184896 contain respectively 59.2 wt.% pentaerythrityl tetraoctanoate, 59.2 wt.%

neopentyl glycol dioleate or neopentyl glycol dicocoate and 59.2 wt.% of Texapring SHM 1 EXP, which is defined as glyceryl ester of various fatty acids obtained from Cognis Deutschland GmbH. US 2010/0184896 does however not disclose to use a cyclic polyhydric alcohol having hetero atoms in the cycle.

Another possible remedy in relation to migration of ink into the packaging material or other substrate has been proposed by WO2008/024968, which discloses offset lithographic printing inks comprising a solvent that is food safe, does not show toxic or malodorous effects, so that its migration properties are less important and a higher tolerance towards migration may be allowed. The solvent comprises at least one water-insoluble triglyceride comprising saturated, C5-C22 aliphatic monocarboylic acids, the melting point of which is such that it is liquid at the temperature at which the printing ink or varnish is to be used. The monocarboxylic acids do however not necessarily originate from a renewable source. The use of unsaturated fatty acid moieties is discouraged because of their odour, which is associated with the presence of short chained fatty acids.

In addition to the considerations explained above, nowadays an increasing tendency and need exists to produce industrial products using renewable raw materials.

## SUMMARY OF THE INVENTION

The present invention therefore seeks to provide a vehicle or carrier which comprises a solvent that is at least partly made from renewable materials, which vehicle is suitable for use in offset printing ink ad/or varnish compositions and the like.

The present invention further seeks to provide an offset printing ink composition and an offset printing varnish composition comprising that vehicle or carrier, and in particular the solvent that is at least partly made from renewable materials. The present invention further relates to a method for producing an offset printing ink composition and an offset printing varnish composition or a carrier or vehicle therefore, which methods involve the incorporation of the solvent composition of the present invention.

In a first embodiment, the invention provides an offset printing composition vehicle or in other words a vehicle for an offset printing composition, comprising a solvent composition, which solvent composition contains an ester of a polyhydric alcohol and at least one carboxylic acid. The offset printing composition vehicle is characterised in that the solvent composition contains at least 50 wt% of a monomeric ester of an isosorbide polyhydric alcohol, with at least one carboxylic acid, the carboxylic acid having a carbon chain containing from 3 up to 25 carbon atoms. Or in other words a C4-C26 carboxylic acid, the carbon atom of the carboxylic acid group included. With monomeric ester is meant that the ester consists of a single molecule of isosorbide which has been esterified with at least one carboxylic acid.

In general such a carboxylic acid will respond to formula I:

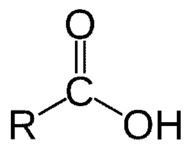

(I)

wherein R is a hydrocarbon rest containing from 3 up to 25 carbon atoms.

In formula I, R may either be a straight chain, branched or cyclic hydrocarbon rest. Thus, the carboxylic acid used to produce the isosorbide ester may either be a straight chain, a branched or cyclic carboxylic acid. Furthermore, R may be saturated or may contain one or more unsaturated bonds, or it may be aromatic. In particular R may contain one or more single or double unsaturated C-C bonds. The carboxylic acid used to produce the isosorbide ester may for example be a straight chain or a branched saturated carboxylic acid, a straight chain or a branched carboxylic acid containing one or more unsaturated bonds, an aromatic carboxylic acid etc. Examples of carboxylic acid suitable for use with the present invention include benzoic acid, 2-ethylhexylic acid, iso-nonanoic acid, octanoic acid, butyric acid, valeric acid etc.

The carboxylic acid used to produce the isosorbide ester may comprise one single type of carboxylic acid, or may be a mixture of two or more different carboxylic acids, depending on the envisaged properties. The carboxylic acids may thereby differ in their composition and/or their chemical structure.

Preferred carboxylic acids are those in which R comprises from 5 up to 17 carbon atoms, preferably from 5 up to 15 carbon atoms.

The inventors have found that the isosorbide ester according to the present invention combines very desirable properties for its particular use according to the present invention, and that it is capable of transferring these desirable properties to a composition containing it.

The inventors have in particular found that the isosorbide ester may have a molecular structure which brings

interesting migration behaviour with respect to a substrate onto which the ester is applied. It is believed that this interesting migration behaviour may partially be brought by the bulkiness of the furan rings. The inventors have further found that the migration behaviour may be affected by the selection of the carboxylic acid or of carboxylic acids mixture, used for preparing the ester.

The isosorbide ester of the present invention appears to offer a desirably high power for wetting solids. This brings many advantages to an offset printing ink and varnish composition which contains the solvent of the present invention comprising the isosorbide ester. The wetting power is very desirable for wetting the pigment particles which are typically incorporated in offset printing inks and in coloured offset printing varnishes. The high wetting power may for instance counteract or limit the agglomeration of the pigment particles, not only when producing the offset printing ink or varnish but also upon storage and in the printing process, with a result that the colour strength of the ink composition may be improved and the homogeneity of a printed ink on a substrate may be improved. Ink and varnish compositions containing the isosorbide ester of this invention exhibit excellent performance in terms of their spreadability on various substrates which may assist in improving the homogeneity of the varnish or ink deposited on the printed surface and therewith its visual aspect.

The isosorbide ester according to the present invention has been found to be characterised by a relatively high Kauri-butanol (Kb) value. The "Kb value" is a measure of solvent power, and may be determined using the standardized test ASTM D1133. A high Kb value is an indication that the isosorbide ester is more capable in dissolving a wide range of resins of varying nature, and in higher concentrations, as compared to existing solvents used in offset printing inks. This is important as offset inks usually contain besides one or more pigments, approximately 40-65 wt. % of resin binders, for example rosin resins, maleic resins, hydrocarbon resins and alkyd resins, to ensure formation of a polymer film which binds the pigments or dyes together and provides resistance properties. Such resin binders are usually absent in inkjet printing inks. The offset printing ink may further comprise approximately 3 - 6 wt. % of additives, for example waxes, siccative agents and/or inhibitors. Without wanting to be bound by this theory, the applicants believe that this advantageous combination of properties, i.e. high wetting power of the pigments and high Kb value associated with good dissolution properties for the resin component present in the offset ink, must be attributed to the structure of the isosorbide moiety in the ester molecule. The high Kb value favours the homogeneity of the vehicle of the present invention and therewith contributes to improving the quality of a printed image in terms of a.o. homogeneity and color strength.

The inventors have further found that the desirable properties outlined above, in particular the Kauri butanol value of the isosorbide ester, the wetting power of the ester for solid particles, for example the wetting power of one or more pigments contained in offset printing ink or varnish composition containing the solvent composition; the spreadablity of the offset printing composition vehicle containing the solvent composition over a surface to be printed, and in particular the balance of properties, may be tuned by adaptation of the isosorbide ester. This permits providing isosorbide esters either with a high Kauri butanol value with a high solvent power, or esters with a lower Kauri butanol value which may function much more as a diluent. The isosorbide ester may, for instance be adapted by varying the degree of esterification, by varying the presence of minor other polyol moieties, such as sorbitan or sorbitol in the isosorbide raw material and by varying the nature and/or composition of the carboxylic acid moiety of the ester.

DETAILED DESCRIPTION.

The present invention will be described in more detail in the part following hereafter, with respect to particular embodiments, but the invention is not limited thereto.

Within the scope of the present invention "vehicle" is understood to be the part of the offset printing ink or varnish composition, which may contain all components of ink or varnish with exception of the pigment or pigments. In particular the vehicle of the present invention may contain one or more resins, which bind the ingredients of the ink or varnish together into a film to the printed surface, and one or more solvents which keep the ink or varnish liquid from when it is applied to the printing device until when it has been transferred to the surface to be printed, so that it can flow. The solvent may dissolve one or more ink components; it may function as a diluent to increase the liquid volume, or a combination thereof. When being transferred to the surface to be printed, the solvent must separate from the body of the ink, to allow the pigment to bind to the surface and obtain drying of the image. The vehicle may further contain the usual additives.

Isosorbide (CAS No 652-67-5) is a bicyclic diol, composed of two adjacent and saturated furan rings, and which corresponds to the formula II below:

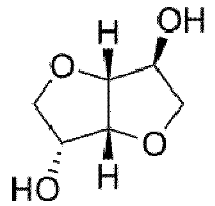

(II)

The isosorbide molecule has a rigid and chiral structure, shows good heat stability and is non-toxic. Isosorbide is considered a renewable material which may be produced from biomass, from a.o. glucose or starch. Isosorbide is typically obtained by the hydrogenation of the aldehyde function in glucose (a.k.a dextrose) to the corresponding alcohol function, thereby producing sorbitol. Sorbitol has a structure based on a straight chain carbon backbone having six carbon atoms, each of them carrying one hydroxyl function. Sorbitol may be represented by the formula

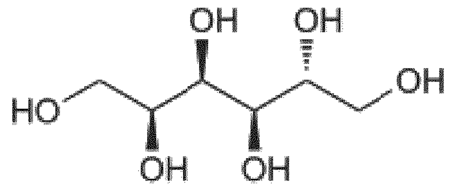

Single dehydration of sorbitol produces sorbitan, comprising one saturated furan ring and having still four hydroxyl functions. Sorbitan may be represented by formula III:

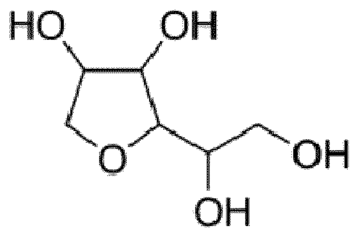

(III)

Double dehydration of sorbitol produces the isosorbide, having only two hydroxyl functions left.

Esters of isosorbide are known in the art.

WO 2013/017261 A1 discloses compositions containing isosorbide monoesters and isosorbide diesters, prepared by esterification of isosorbide, commercially obtained as "Sorbon" from Ecogreen Oleochemicals, with caprylic (octanoic) acid. The monoester product contains 51 wt.% of the monocaprylate, 31 wt.% of the dicaprylate and 18 wt.% remaining isosorbide. The diester product contains 90 wt.% of the dicaprylate and 9% of the monocaprylate. Both products are shown to be effective thickeners for surfactants when added at 1 wt.% to the composition. The monoester product is further shown to exhibit antimicrobial activity, by controlling the growth of a number of bacteria, fungi and yeasts, at concentration levels below 10000 ppm wt. Primarily the monoester product is then proposed for use in the preparation of a cosmetic, dermatologic or pharmaceutic composition, a plant protection formulation, a wash- or cleaning agent or a colour or coating agent.

WO 2013/017257 A1 describes the same monoester and diester products as in WO 2013/017261 A1, and demonstrates that it is only the monocaprylate which is responsible for the antimicrobial activity observed, and that isosorbide itself, nor the dicaprylate, exhibit any such activity. Again, the monoester product is proposed for use in the preparation of a cosmetic, dermatologic or pharmaceutic composition, a plant protection formulation, a wash- or cleaning agent or a colour or coating agent. WO 2013/017255 A1 describes the same monoester and diester products, and demonstrates the effect of isosorbide monocaprylate as a thickener of an aqueous surfactant composition, at levels of up to 2.0 wt.%. WO 2013/017256 A1 describes the same diester product, and demonstrates the effect thereof as a thickener of an aqueous surfactant composition, at a level of 1.0 wt.%. In both latter documents, the use of their isosorbide esters are proposed in the preparation of a cosmetic, dermatologic or pharmaceutic composition, a plant protection formulation, a wash- or cleaning agent or a colour or coating agent.

These documents however fail to disclose the excellence which isosorbide esters may exhibit as solvents in the formulation of offset printing varnish, offset printing inks and associated compositions.

In a preferred embodiment, the carboxylic acid used to produce the isosorbide ester is a fatty acid having a

carbon chain containing from 4 up to 26 carbon atoms. This way an isosorbide ester as a component for a solvent may be provided which may be derived almost exclusively from renewable raw materials. The isosorbide polyol part of the ester is preferably obtained from glucose or dextrose, which may be obtained from starch. The fatty acid part of the isosorbide ester may for instance be obtained from fats which originate from vegetal products such as for example corn, rapeseed, coconut, cuphea, oil palm and the fruit kernels thereof, and many others.

A fatty acid ester of isosorbide may bring the advantage of being non-toxic and may have a low odour and/or taste, such that the solvent containing the ester, the vehicle containing the solvent composition, the offset varnish composition and the offset ink composition which contain the vehicle, may be suitable for more sensitive applications, such as for treating substrates which come into contact with foodstuffs. In applications, for treating substrates which come into contact with foodstuffs the use of synthetic carboxylic acids is preferably reduced to a minimum or even avoided.

The use of fatty acid esters of isosorbide permits providing a solvent composition with an oral LD50 value with rats of at least 2000 mg/kg of body weight. This means in practise that a consumption of 2000 mg of the isosorbide fatty acid ester of this invention per kg body weight is not considered toxic.

Within the scope of this invention either one or both of the OH groups of the isosorbide may be esterified with a carboxylic acid. Esterification may be done with one single carboxylic acid or a mixture of two or more different carboxylic acids. Also within the scope of this invention, the isosorbide ester may be a mixture of monoesters and diesters of isosorbide with at least one carboxylic acid. Therefore, where the present application refers to an ester of isosorbide, this includes mixtures of mono- and di-esters of isosorbide, with one single or a mixture of two or more different carboxylic acids. The degree of esterification of the isosorbide ester may vary within a range of between 1.00 and 2.00, but preferably varies in the range of 1.50-1.99, more preferably in the range of 1.60-1.98, even more preferably in the range of 1.70-1.97, and yet more preferably in the range of 1.75 -1.95. As has been outlined above, the degree of esterification of the isosorbide has a strong effect on the performances of the isosorbide ester and it may be selected by the skilled person taking into account the envisaged application and properties of the offset printing composition vehicle and the nature of the other components present in the offset printing composition vehicle.

In this respect the inventors have observed that the mono-ester of isosorbide brings wetting power and spreadability to the offset printing vehicle and to a composition containing the vehicle, such as the offset printing ink and offset printing varnish. The wetting power is beneficial for quickly wetting substrates to be printed and may therefore be beneficial to the offset printing process. The wetting power may also be beneficial to the wetting of solid particles, such as resin particles contained in the offset printing composition vehicle, or pigment particles contained in an offset printing ink or coloured offset varnish composition and that way assist in stabilising the dispersion of the ink composition. This may bring advantages in preparing the inks and varnishes according to the present invention. The improved wetting brings further advantages in the stability and the shelf life of the vehicle according to the present invention containing the ester and further containing solid particles, and in the quality of an image printed using a printing ink containing the vehicle of this invention, as well as in the quality and gloss of a varnish layer containing the vehicle of this invention, printed on a substrate as an overlay varnish for a printed image or a base varnish to be printed upon. The inventors have further found that the presence of monoester tends increases the viscosity of the ester composition. By selecting an appropriate degree of esterification, the skilled person will be capable of controlling the viscosity as well as the wetting properties provided by the isosorbide ester and the offset printing composition vehicle of this invention containing the isosorbide ester. By selecting an appropriate degree of esterification, the skilled person will be capable of controlling the Kauri butanol value, and of providing either an ester with good solvent properties or an ester which will much more function as a diluent for the other components present in a formulation.

The concentration of monoester present in the isosorbide ester composition as defined in the present invention may be readily determined by measuring the hydroxyl number, and assuming that only isosorbide monoester and isosorbide diester are present, hence assuming that all the hydroxyl functionality is due to the monoester presence.

The amount of free, non-esterified isosorbide present in the solvent composition according to the invention is preferably as low as possible as isosorbide may be reactive with other components present in an offset printing composition vehicle or an offset printing ink or varnish containing that vehicle, and may thereby adversely affect the viscosity of the offset printing ink composition or offset printing varnish composition. Any amount of unreacted isosorbide present may for example be measured using gas chromatography (GC).

The isosorbide polyol raw material may contain sorbitol, a polyol having six OH functions as an impurity. The content of free, non esterified sorbitol in the ester is preferably as low as possible as it may be reactive with other components present in a composition and may thereby adversely affect the viscosity of the vehicle of this invention or of an offset printing ink composition or an offset printing varnish composition containing the vehicle of this invention. When sorbitol is present, it is within the scope of the present invention that one, two, three, four, five or all of the OH groups of sorbitol may be esterified with a carboxylic acid. The OH groups may thereby be esterified with the same carboxylic acid or with a different carboxylic acid. Within the present invention therefore, the solvent composition according to the present invention may contain one or more different sorbitol esters, and may contain a mixture of sorbitol monoesters, di-esters, tri-esters, tetra-esters, penta-esters and hexa-esters.

When sorbitan is present as an impurity in the isosorbide polyol, it is within the scope of the present invention that one, two, three, or all four of the OH groups of the sorbitan may be esterified with a carboxylic acid. The OH groups of sorbitan may thereby be esterified with the same carboxylic acid or with a different carboxylic acid. The solvent composition according to the present invention may thus contain one or more different sorbitan esters, and may contain a mixture of sorbitan monoesters, di-esters, tri-esters and tetra-esters. The content of free, non esterified sorbitan in the solvent composition is preferably as low as possible as it may be reactive with other components present in a composition and may thereby adversely affect the viscosity of the offset printing composition vehicle, and an offset printing ink composition or an offset printing varnish composition containing that vehicle.

A varying degree of esterification of the isosorbide polyol, will have the effect that the hydroxyl number of the ester varies as well. According to the present invention the degree of esterification of the isosorbide polyol, may be determined by measuring the amount of free OH functions remaining in the ester product and/or the solvent composition. The number of free OH functions may be determined by measuring the hydroxyl value. With a degree of esterification varying form 1.00 to 2.00 the hydroxyl value of the isosorbide ester may vary within wide ranges. Although higher hydroxyl values may be appropriate in case low degrees of esterification are envisaged, the hydroxyl value of the isosorbide ester may amount up to 50 mg KOH/g or 40 mg KOH/g, although with increasing degree of esterification the OH value may correspond to 20.0, 10 or 5 mg KOH/g ester or less. Although a KOH number of 0 mg KOH would be representative of complete esterification, in practise maximum feasible degrees of esterification will correspond to a OH number of about 0.25 mg KOH/g of ester. Depending on the envisaged properties, the hydroxyl value of the isosorbide ester may be selected to be higher than a minimum value, for example at least 8.0 mg KOH/g, often at least 10.0 mg KOH/g preferably at least 15.0 mg KOH/g.

By controlling the degree of esterification, the number of OH functions that have not been esterified with carboxylic acid may be controlled and therewith the wetting power and viscosity provided by the isosorbide ester and the solvent composition containing the ester. Free, non-reacted OH groups namely bring the advantage of wetting power. Free, non-reacted OH groups tend to increase the viscosity of the ester. Since the hydroxyl value is to some degree related to the monoester content, the inventors may prefer to also control the hydroxyl value of the isosorbide ester over and above controlling the monoester content.

With a varying degree of esterification, the concentration of mono-ester and di-ester present in the isosorbide ester mixture and the solvent composition, may vary as well. In general, the concentration of mono-ester of isosorbide present in the isosorbide ester composition may vary within wide ranges, and will be selected by the skilled person taking into account the other components of the solvent composition and possibly the offset printing composition vehicle and the envisaged use. The concentration of mono-ester present in the isosorbide ester mixture may for example vary from a level of at most about 1.0 wt.% based on the total weight of the ester mixture for isosorbide esters with a high degree of esterification close to complete esterification, or about 3.0 or 5.0 wt.% monoester, whereas a lower degree of esterification of the isosorbide may correspond to a mono-ester content of at least 75 or 50 wt.% of monoester based on the total weight of the ester mixture, or else about at most 30 or 20 wt.% monoester.

The present invention thus permits to adapt the properties of the isosorbide ester and of the solvent composition and offset printing composition vehicle containing it, by varying the degree of esterification of the isosorbide. Further tuning of the properties may be achieved by using a mixture of different isosorbide esters, wherein the isosorbide esters may differ in respect of the nature of the carboxylic acid used.

Depending on the degree of esterification, the dynamic viscosity at 25°C of the carboxylic acid isosorbide ester according to the present invention may vary. Whereas a high degree of esterification will usually give rise to an ester with a lower viscosity which may for example range from about 5, 10 or 20 mPa.s, lower degrees of esterification will give rise to higher viscosities, for example in the range of about at least 100, 200, 400, 500 or even 600 mPa.s. The fact that the viscosity may be varied within these wide ranges allows a wide degree of freedom in the use of a vehicle based on the isosorbide carboxylic acid ester of this invention for the formulation of offset printing inks or varnishes having the correct final viscosity required for the application. The inventors have observed that a low viscosity permits achieving good drying properties of the ink, due to good migration ability of the ink. With high degree of esterification, the isosorbide ester may for example function as a diluent. The viscosity of the isosorbide ester is measured according to ASTMD 445.

The carboxylic acid esters of isosorbide have been found to show a particularly high Kauri-butanol (Kb) value. In addition the inventors have observed that the Kb value may further be tuned by varying the nature of the carboxylic acid of the isosorbide ester and/or by varying the degree of esterification, in order to provide an ester with good solvent properties or an ester which functions much more as a diluent for the other components present in a formulation. The isosorbide ester as defined in the present invention has typically a Kb value which is as high as possible, for example at least 50, preferably at least 75, more preferably at least 90 or even higher. Such high Kb values indicate that the ester has particular advantageous solvent properties relative to a wide range of resins in a wide range of concentrations. The Kauri-butanol value of a solvent represents the relative strength of a solvent, in particular the ability of a solvent of dissolving materials. In the present application the Kauri-butanol value is used to determine the dissolving power of the isosorbide ester for printing ink resins. The Kauri-butanol value is in particular the volume in ml at 25°C of the solvent,

required to produce a defined degree of turbidity when added to 20 g of a standard stock solution of Kauri resin in 1-butanol. The Kauri resin is a thick, gum-like resin obtained from a particular coniferous tree, and was one of the first resins used for making varnish. Kauri resin is readily soluble in 1-butanol but is not soluble in many other solvents. As a result, the resin solution will tolerate only a limited amount of dilution. Better solvents, for example toluene, may be added up to larger quantities before the solution becomes cloudy, and thus have a high Kauri butanol value. Weaker solvents like hexane may only be added in smaller quantities and will have a small Kauri butanol value. The Kauri butanol value (Kb value) is usually determined according to ASTM D1133 standardized test. Mild solvents have a Kauri butanol value in the tens and twenties, powerful solvents have ratings in the low hundreds.

In preparing esters of isosorbide, fatty acids of natural origin may be used as well as synthetic carboxylic acids. With fatty acids which originate from natural oils and/or fats, the fatty acid part of the fatty acid ester will usually comprise a mixture of fatty acids with a varying number of carbon atoms, in particular a mixture of fatty acids having from 4 up to 26 carbon atoms in the hydrocarbon chain. The composition of the fatty acid mixture may vary, and it may vary a.o. with the nature of the fat from which they are derived, and with any pretreatment to which the oil and/or fat and/or fatty acid mixture has been subjected, such as for example refining. If so desired, fatty acids which originate from a refined oil or fat may be used.

The fatty acid mixture may exclusively consist of saturated fatty acids, or it may contain fatty acids containing one or more unsaturated bonds. Unsaturated bonds include C=C double bonds as well as triple unsaturated C-C bonds. The use of saturated acids is preferred over unsaturated fatty acids as saturated fatty acids produce less odour as compared to unsaturated fatty acids, and show a better resistance to oxidation and a better heat stability, so that the risk for the formation of unwanted by-products is minimised. The use of saturated fatty acids also permits limiting the risk to a.o. so-called yellowing of white inks as well as the risk to the formation of cracks during or after printing.

In a preferred embodiment use is made of a saturated carboxylic acid for producing the isosorbide ester. More preferred, if the carboxylic acid is a mixture, at least 90 wt.% of the carboxylic acids in the mixture are saturated carboxylic acids, preferably at least 95 wt.%, more preferably at least 99 wt.%. In particular in case fatty acids of natural origin are used, the fatty acid mixture will usually be a mixture of saturated and unsaturated fatty acids, whereby preferably at least 90.0 wt.% of the fatty acids in the mixture are saturated fatty acids, preferably at least 95.0 wt.%, more preferably at least 99.0 wt.%.

The iodine number or iodine value, expressed in grams of $I_2$ per gram of sample, of the carboxylic acid ester of this invention is preferably smaller than 20, preferably smaller than 10, more preferably smaller than 5 or smaller than 1, most preferably smaller than 0.5. The iodine number is representative for the amount of unsaturated bonds present in the carboxylic acid ester. A particularly low iodine value will usually be found when use is made of synthetic carboxylic acids for producing the isosorbide ester. A low iodine value brings the advantage that the risk for oxidation may be reduced, preferably to a minimum. This brings the advantage of a higher oxidative stability, but also a higher thermal or heat stability, not only of the isosorbide ester but also of all the vehicle containing the ester and the offset printing ink and varnish containing the ester.

The inventors prefer to use carboxylic acids, in particular fatty acids from natural origin, which are typically characterised by an even number of carbon atoms. The applicants prefer to use fatty acids from natural origin, which are typically characterised by a straight chain hydrocarbon backbone arrangement. Fatty acids which originate from a natural source will usually be available as a mixture of several fatty acids. Preferably at least 90 wt.% of the fatty acids in the mixture are straight chain fatty acids, preferably at least 95 wt.%, more preferably at least 99 wt.%.

In an embodiment of the present invention, the fatty acid mixture is a mixture which comprises at least 75 wt.% of fatty acids having 5 up to 11 carbon atoms in their hydrocarbon chain, more preferably at least 85 wt.%, even more preferably at least 90.0 wt.%, yet more preferably at least 95.0 wt.%. These fatty acids are usually called medium chain fatty acids. The applicants have found that these medium chain fatty acids bring the advantage that the pour point of the ester mixture may be reduced, and that they provide esters which are more fluid, and remain fluid at lower temperatures. The applicants have found that these medium chain fatty acids bring the additional advantage of having a low viscosity. This is an advantage in the present invention where the isosorbide ester is used to produce a solvent for use in an offset printing composition vehicle, and may function as a solvent and/or a diluent to dilute the vehicle composition, as it may help to control the viscosity. This is also an advantage in the preparation of the offset printing ink and varnish compositions, and in the further use of these offset printing ink and varnish compositions resulting from the use according to the present invention. Preferably the melting point and the pour point of the isosorbide ester of this invention is below room temperature (23°C), preferably at most 20°C, more preferably at most 10°C, even more preferably at most 0°C. A further advantage of such low melting point is that the final composition remains clear at room temperature, and preferably also the intermediates thereof.

In an embodiment of the present invention, the fatty acid mixture is a mixture in which the content of fatty acids having from 11 up to 21 carbon atoms in the carbon chain, i.e. CnCOOH - $C_{21}$COOH fatty acids, is preferably at most 15 wt.%, more preferably at most 10.0 wt.%, even more preferably at most 5.0 wt.%, yet more preferably at most 3.0 wt.%. The applicants have found that this feature brings the advantage of keeping the pour point of the ester and of the

solvent composition low, and transfers this advantage to the compositions containing them. The presence of fatty acids with longer hydrocarbon backbones moreover permits improving the gloss.

In an embodiment of the present invention, the fatty acid is a mixture of which the content of fatty acids having from 11 up to 17 carbon atoms in their carbon chain, i.e. CnCOOH - $C_{17}$COOH fatty acids, is at most 5.0 wt.%, preferably at most 3.0 wt.%. The applicants have found that this helps in keeping the pour point low, as explained in the preceding paragraph, in particular if the mixture is rich in saturated fatty acids.

Suitable examples of saturated straight chain fatty acids having 5 up to 11 carbon atoms in the carbon chain include hexanoic acid (caproic acid), heptanoic acid (enanthic acid), octanoic acid (caprylic acid), nonanoic acid (pelargonic acid), decanoic acid (capric acid), undecanoic acid, dodecanoic acid (lauric acid), and examples of unsaturated straight chain fatty acids may comprise undecenoic acid and lauroleic acid, and mixtures of two or more thereof. Suitable saturated fatty acids having higher carbon numbers include tetradecanoic acid (myristic acid), hexadecanoic acid (palmitic acid), octadecanoic acid (stearic acid), eicosanoic acid (arachidic acid), and docosanoic acid (behenic acid).

Suitable examples of unsaturated fatty acids include tetradecenoic acid (myristoleic acid), hexadecenoic acid (palmitoleic acid and/or sapeinic acid), octadecenoic acid (oleic acid, or other isomers depending on the location of the double bond), octadecadienic acid (linoleic acid, in its various forms depending on the location of the double bonds), and alpha-linolenic acid (C18:3).

Suitable examples of synthetic carboxylic acids include isononanoic acid, 2-ethylhexylic acid, benzoic acid, branched carboxylic acids, for example cekanoic acids, neo acids etc.

For the synthesis of branched acids the following industrial production processes are particularly mentioned. Each of these processes is considered suitable for producing branched acids suitable for use within the present invention, in particular for producing cekanoic acids. Examples of cekanoic acids suitable for use with the present invention are C8 cekanoic acid or isooctanoic acid, and C10 cekanoic acid. A first process for producing such acids comprises carboxylation of olefins in the so-called Koch process. According to this process carbon mono oxide and water addition to olefins leads directly to carboxylic acids. Depending on the nature of the olefin, either cekanoic acids or neo acids may be obtained. According to another process carbonylation of olefins gives aldehydes, which may be oxidized to carboxylic acids. Similar acids can be made as with the Koch process. According to a further process use is made of oxidation of aldehydes, obtained by aldol condensation. This type of process may be used for the production of for example 2-ethylhexanoic acid.

Neo acids are highly branched synthetic trialkyl acetic acids in which the carboxylic group is attached to a quaternary carbon atom, where the other three substituents are alkyl groups. Neo acids may be manufactured by reacting an olefin with a high purity carbon monoxide under high pressure. Examples of commercially available neoacids include those having from 5 up to 28 carbon atoms in the branched carbon chain, for example neopentanoic acid or 2,2-dimethylpropanoic acid, neoheptaonoic acid or 4,4-dimethylpentanoic acid, neodecanoic acid or 2,2-dimethyloctanoic acid, C13 neoacid, C8 neo acid or 2-ethylhexoic acid. Other neo acids include neo fatty acids, in particular fatty acids having a terminal tertiary butyl group or two iso-methyl groups, for example 13,13-dimethyltetradecanoic acid or neopalmitic acid, and C9-C13 neo fatty acids and C9-C28 neo fatty acids.

In an embodiment of the present invention, the solvent comprising the isosorbide ester or the isosorbide ester further comprises at least one ester of sorbitan with at least one fatty acid having from 4 up to 26 carbon atoms in the carbon chain. The sorbitan may represent at least 1.0 wt.% of the total amount of polyol which is obtainable by the full hydrolysis of all the esters present in the solvent, preferably at least 3.0 wt.%, more preferably at least 5.0 wt.%, even more preferably at least 7.0 wt.%, yet more preferably at least 8.0 wt.%, and where optionally the sorbitan represents at most 20 wt.% of the total amount of polyol which is obtainable by the full hydrolysis of all the esters present in the solvent, preferably at most 17 wt.%, more preferably at least 15.0 wt.%, even more preferably at least 13.0 wt.%, yet more preferably at least 12.0 wt.%.

The isosorbide ester may be the only solvent contained in the solvent composition for the offset printing composition vehicle. If so desired, however, one or more further solvents may be present in order to finetune the properties of the offset printing composition vehicle, e.g. the rheological properties, the compatibility of the offset printing composition vehicle or ink or varnish composition containing the vehicle, with the substrate to be printed, the rubbing resistance etc. The solvent other than the isosorbide ester may vary within wide ranges and may typically represent an amount of less than 50 wt.% of the total amount of solvent present, preferably less than 25 wt.%.

The amount of the above described solvent composition present in an offset printing composition vehicle may vary within wide ranges and will usually vary from 25 - 50 wt.% based on the weight of the offset printing ink or varnish composition, preferably from 30 - 50 wt.%.

The offset printing composition vehicle of the present invention may further comprise the usual ingredients, a.o. one or more resins, one or more mineral oils or one or more natural vegetable oils. The mineral oil or a natural vegetable oil may function as a diluent that is evaporated upon drying of the ink, to act as a carrier for the resins and pigments and allow the final formation of an ink film on the printed material. Drying may occur by evaporation of the oil, but also by oxidation.

Any additives for example a wax may either be included in the vehicle or in the offset printing ink composition. Additives may be used to provide specific ink properties which have an effect on the lithographic behavior of the ink on press. Waxes may for example be used to improve rub resistance and slip properties of the dried ink film.

The vehicle may contain one or more resins which often function as the binding agent. Examples of resin binding agents suitable for use with this invention include hard resins, chemically modified wood resin, synthetic hydrocarbon resin, soft alkyd resin. The use of mineral or synthetic oil is preferably avoided when the ink is used to print materials that are intended for substrates which may contact foodstuffs. 45-80 wt. % of resin binder may be incorporated in the offset printing ink or varnish to provide optimal printability and result. The concentration of resin may however be higher or lower than the amounts indicated. Alkyd resins are considered suitable binding agents for use with the present invention, but they may also serve to improve gloss and wet the pigment.

Other suitable binding agents may be so-called hard resins. Hard resins may also imply hardness, gloss, adhesive properties and flexibility to the ink. The resin may function as a film former to bind the pigment to the substrate. Examples of suitable hard resins include such as rosins, rosin esters, maleic modified resins, rosin modified fumaric resins, rosin-modified phenol resins, dimerized and polymerised rosins, phenolics, rosin modified phenolics, terpenes, polyamides, cyclised rubber, acrylics, hydrocarbons and modified hydrocarbons or a mixture of two or more hereof. Those hard resins imply hardness, gloss, adhesive properties and flexibility to the ink. The resin functions as a film former to bind the pigment of the substrate. Particularly preferred resins have a molecular weight mw of 5000 - 120000, an acid number of 10 - 40, a hydroxyl number of 20 - 70 and a melting range of 120 - 190° C. In this case, the measuring of the melting range is carried out according to the capillary method. The resins behave sensorial neutral and dissolve in the mentioned fatty acid esters of their mixtures without the employment of co-solvents. Moreover, the resins are compatible with the mentioned carboxylic acid esters or their mixtures. The compatibility of a resin solution and a vehicle, respectively, is defined by the hexane number (HEZ). The compatibility is preferably in a HEZ - range between 0 and +20.

The above described vehicles of the invention are compatible with the pigments commonly used in offset printing inks. An offset printing ink may be prepared from the above-described vehicle by formulation with an appropriate pigment and any additives required for the specific application. The offset printing ink composition is usually used in combination with a fountain solution, which is dispersed in small droplets in the viscous ink.

The above described ester of isosorbide with at least one carboxylic acid may be prepared by a conventional reaction of isosorbide with a carboxylic acid. The carboxylic acid may either be a compound of high purity containing one single type of carboxylic acid, or it may be a mixture of two or more different carboxylic acids. The carboxylic acids may a.o. differ in their number of carbon atoms in the hydrocarbon chain, in their chemical composition and/or chemical structure. According to a particular embodiment use is made of fatty acids as carboxylic acids. the isosorbide carboxylic acid ester may be prepared by a reaction of isosorbide with individual carboxylic acids in a highly purified form, for example a $C_5COOH$ carboxylic or fatty acid or a $C_9COOH$ carboxylic or fatty acid. In case use is made of fatty acids with vegetal origin, the fatty acid will be a mixture of several fatty acids with varying number of carbon atoms in the hydrocarbon chain. If so desired, use can be made of fatty acids, which originate from a natural fat or oil, or from a natural fat or oil which has been subjected to one or more refining steps. A synthetic mixture of carboxylic acids may be obtained by mixing appropriate amounts of the individual carboxylic acids or fatty acids. Thereby preferably a carboxylic acid mixture, in particular a fatty acid mixture may be chosen such that the ester as defined in the invention is liquid at the temperature at which the printing ink is to be used. This may be achieved by selecting a carboxylic acid of which the carbon number, or a mixture of carboxylic acids of which the weight average carbon number, is in the preferred ranges mentioned above, such as carboxylic or fatty acids having from 4 up to 11 carbon atoms in the hydrocarbon chain, preferably 5-11. Particularly preferred are the carboxylic acid esters which contain carboxylic or fatty acids having from 5 up to 9 carbon atoms in the hydrocarbon chain.

The esterification reaction of isosorbide with at least one carboxylic acid can be carried out in a known manner, e.g. via reaction of the isosorbide possibly containing sorbitan or sorbitol with a suitable mixture of carboxylic acids or pure carboxylic acids An excess of carboxylic acid over isosorbide of from 5 to 50 mole %, more preferably from 10 to 30 mole %, is often used. The excess used will usually be determined taking into account the envisaged degree of esterification. The carboxylic acid can however also be used in stoichiometric excess with respect to the isosorbide. The esterification reaction can be autocatalysed or may take place in the presence of a catalyst, for example an acidic ion exchange material. The esterification step preferably takes place by a process in which the water produced in the reaction is removed from the reaction via azeotropic distillation with the carboxylic acid. The esterification reaction is preferably carried out in a reactor in which the reaction mixture is intensively mixed using a stirrer or of a circulating pump. The starting materials and the catalyst can be charged to the reactor simultaneously or in succession. The raw material could be used in liquid form or solid form. The isosorbide polyol is usually in the form of crystals (without water), with an isosorbide content of 97-100%. The isosorbide polyol may also be in liquid form, for example a mixture composed of 80 wt. % isosorbide and 20 wt. % water, but other mixtures may be used as well.

In a preferred embodiment, the solvent composition is free of mineral oil or oils and vegetable oil or oils and mainly consists of one or more esters of a polyhydric alcohol with at least one carboxylic acid. In a particularly preferred

embodiment the solvent composition mainly consists of a monomeric ester of isosorbide as a polyhydric alcohol with at least one carboxylic acid having a hydrocarbon chain containing from 3 up to 25 carbon atoms, or in other words wherein R in formula I is a hydrocarbon chain containing from 3 up to 25 carbon atoms wherein the at least one carboxylic acid is as described above, no other solvents being added.

The present invention also relates to a solvent composition for use in an offset printing composition, which solvent composition comprises an ester of a polyhydric alcohol with at least one carboxylic acid. The solvent composition is characterised in that the solvent composition comprises an ester of isosorbide as a polyhydric alcohol with at least one carboxylic acid having a hydrocarbon chain containing from 3 up to 25 carbon atoms as a component of the solvent composition, as described above, or in other words wherein R in formula I is a hydrocarbon chain containing from 3 up to 25 carbon atoms.

The present invention also relates to an offset printing ink composition containing an offset printing composition vehicle comprising a solvent composition as described above. An offset printing ink will usually contain 10-40 wt. % of pigments with respect to the total weight of the ink composition, although pigment concentrations may also vary from 15-25 wt. % with respect to the weight of the offset printing ink composition. The remainder will be made up by the vehicle and possibly color auxiliary agents and additives.

The present invention also relates to an offset printing varnish composition containing an offset printing composition vehicle comprising a solvent composition as described above. A pigmented offset printing varnish may contain up to 15-25 wt. % of pigments with respect to the weight of the varnish composition, but the concentration of pigment may be substantially smaller as well. It is remarked that an offset printing varnish must not necessarily be pigmented, i.e. pigments may be absent. The remainder of the varnish will be made up by the vehicle and possibly color auxiliary agents. A varnish is usually waxfree. A varnish may be seen as an ink composition free of pigments, or containing some pigment. A varnish will mostly be used as a sealer that overprints ink and paper.

The nature of the pigment is not critical to the present invention. The pigment or pigment composition may be chosen from any of the pigments known to the skilled person. Alternatively, the ink may include an extender. Although varnishes will normally not include any pigment in their composition, they may be coloured by the presence of a pigment. The at least one pigment may be selected from any of the pigments known to the skilled person, the nature of the pigment not being critical to the present invention. The offset printing ink composition may further include an extender.

The offset printing composition vehicle according to the present invention preferably has a melting point such that the vehicle is liquid at the temperature at which the printing ink or varnish is to be used. The offset printing composition vehicle according to the present invention is therefore preferably liquid at the temperature of the printing press, and preferably even at the usual temperatures of use, e.g. at temperatures above 5°C. In some cases, for example if the printing ink or varnish is to be used only in warm atmospheres, the solvent may be solid at ambient temperature, provided it melts at a temperature at which it is to be used, such as 25°C.

The present invention further relates to the use of the offset printing composition vehicle according to the present invention for controlling the migration of an offset printing ink composition or an offset printing varnish composition containing that vehicle, into the substrate being treated in the offset process. The present invention relates to a method for controlling the migration of an offset printing ink composition or an offset printing varnish composition into the substrate being treated in the offset process. The method is characterised in that the ink composition or the varnish composition contains the vehicle of the present invention. As has been explained above, the isosorbide moiety in the carboxylic ester is believed to advantageously affect the migration behaviour of the ink or varnish, a property which may be further tuned by properly selecting the carboxylic acid moiety of the ester and/or by using selected carboxylic acid mixtures and by selecting the adequate esterification degree, in particular the adequate ratio of mono- and diesters ofisosorbide.

In an embodiment, the use according to the present invention is thus for a method for the preparation of an offset printing ink or an offset printing varnish composition suitable for use with food packaging, preferably with primary food packaging.

In another embodiment, the use according to the present invention is a method for improving the oxidative stability and/or the thermal stability of the offset printing ink and/or varnish composition. The applicants have found that the isosorbide structure contributes in achieving improved oxidative and thermal stability of the compositions containing the ester.

In still another embodiment, the use according to the present invention is a method for adjusting the viscosity of the offset printing ink and/or varnish composition. Thereby the isosorbide ester may not only function as a solvent for the resin, but also as a diluent for the offset printing ink and/or varnish, which has the effect that the storage stability is improved.

In an embodiment, the use according to the present invention is a method for improving the colour strength of the offset printing ink and/or varnish composition. This may be achieved by the improved wetting activity provided by the isosorbide ester.

In a further embodiment, the use according to the present invention is a method for improving the gloss of a substrate treated with the offset printing ink and/or varnish composition.

Good rub resistance of the finished prints may be achieved by applying an overprint using a water based printing ink.

The invention is further illustrated in the examples below, without being limited thereto.

Changes in odour and flavour of wrapped goods caused by printing inks are tested according to DIN10955, testing of packaging and wrapping material for food. The values should be smaller than 2.

In the offset printing process, the printing ink is applied to the surface of the substrate to be printed. In the printing inks according to the present invention, the ester may usually function as a carrier for the ink, to achieve good spreading of the coverage over the surface where it is to be applied. It has been found that the fatty acid esters of this invention show a good ability to penetrate porous materials, for example cellulose based materials, for example paper, card etc. Upon application of the ink, the ester will transport the pigment to the surface of the substrate to be imprinted, migrate into the substrate and leave the pigment on the surface.

Because the offset printing inks of this invention may be designated as having little odour, little migration and little swelling, they are considered suitable in particular for use with food packaging comprising for example, cardboard and paper.

EXAMPLES

In order to illustrate the invention several isosorbide esters were produced using the fatty acid mixtures listed in table 1 below.

A reaction vessel was charged with isosorbide, in the form of a liquid containing 20 wt. % of water and 80 wt. % of isosorbide. Fatty acids with the composition given in table 1 below were added in an excess, in a weight ratio of 1.90 equivalents of fatty acid per equivalent of isosorbide. 1.90 wt. % with respect to the weight of the isosorbide of an acid catalyst was added.

The esterification reaction was carried out at elevated temperature and was stopped before an acid value of 5 mg KOH/g was obtained. The reaction mixture was neutralized by addition of a base.

The crude reaction product contained a blend of fatty acid isosorbide mono-ester, fatty acid isosorbide di-ester and an excess of fatty acid that had not reacted. The excess of fatty acid was removed from the reaction mixture by distillation under vacuum (<40 mbar), the temperature was gradually increased from 150°C to 210°C. Thereafter the reaction mixture was stripped with steam at 210°C under vacuum.

The surface tension and Kauri butanol values of the fatty acid isosorbide esters thus produced are given in Table 2 and compared with the physicochemical properties of conventional solvents.

The physicochemical characteristics of the fatty acid isosorbide esters thus produced are given in Table 3 and compared with the physicochemical properties of conventional solvents.

**Table 1 : composition of fatty acid mixture used to produce isosorbide esters.**

| | 1 | 2 | 3 | 4 | 5 |
|---|---|---|---|---|---|
| Fatty Acid (wt.%) | | | | | |
| n-hexanoic | 100 | | | | |
| n-heptanoic | | 100 | | | |
| n-Octanoic | | | 70 | 55 | |
| n-Decanoic | | | 30 | 45 | |
| Palmitic | | | | | 4.0 |
| C18:1 Oleic | | | | | 80.5 |
| C18:2 Linoleic | | | | | 14.0 |
| Stearic | | | | | 1.5 |

**Table 2.**

| | CAS Number | Manufacturer | Surface tension Du Noüy ring method (mN/m) | Kauri butanol ASTM D 1133 |
|---|---|---|---|---|
| Aliphatic mineral spritis | 64742-47-8 | Shell Chemicals | 26 | 29 |

(continued)

| | CAS Number | Manufacturer | Surface tension Du Noüy ring method (mN/m) | Kauri butanol ASTM D 1133 |
|---|---|---|---|---|
| Xylene | 1330-20-3 | Shell Chemical | 29 | 90 |
| Toluene | 108-88-3 | Shell Chemicals | 29 | 105 |
| D-limonene | 5989-27-5 | Super Chem Corp | 25 | 67 |
| Vegetable oil esters | | | 22-31 | 47-66 |
| Soybean oil methyl ester | 67784-809 | Stepan | 31.5 | 38 |
| Isosorbide ester nr. 3 | | Oleon | 30 | 96 |

**Table 3 : Physicochemical properties.**

| Property - method/ Fatty acid isosorbide ester | 1 | 2 | 3 | 4 | 5 |
|---|---|---|---|---|---|
| Density (g/cm3) at 25°C | 1.0681 | 1.0474 | 1.0212 | 1.019 | 0.962 |
| Mol Wt (calculated) | 342 | 370 | 410 | 420 | 674 |
| Acid value (mg KOH/g) AOCS Cd 3d-63 | 0.7 | 0.83 | 1.55 | 0.78 | 0.094 |
| wt.% mono-ester (calculated) | 1.6 | 5.35 | 3.56 | 3.98 | |
| OH-value (mg KOH/g) AOCS Cd 13-60 | 3.7 | 11.7 | 8.3 | 8.2 | 18 |
| Colour (APHA) AOCS Td1b-64 | 225 | 116 | 78 | 166 | 563 |
| Dynamic viscosity at 25°C (mPa.s) | 47.0 | 53.9 | 63.7 | 64.3 | 124.9 |
| Pour point (°C) ASTM D97 | -54°C | -13°C | -11°C | -6°C | 3°C |
| Flash point (°C) AOCS Cc9a-48 | 222°C | | | | 300°C |
| Odour before stripping | Faint | Faint | Faint | Faint | Faint |

The molecular weight of the fatty acid esters of isosorbide is measured using GPC. The monoester content of the isosorbide ester is calculated taking into account the amount of unreacted OH, measured by gas chromatography.

The surface tension was measured using the Du Noüy ring method (http://www.kruss.de/en/theory/measurements/surface-tension/ring-method.html. The surface or interfacial tension is measured with the help of an optimally wettable ring suspended from a precision balance. A height-adjustable sample carrier is used to bring the liquid to be measured into contact with the probe. A force acts on the balance as soon as the probe touches the surface. If the length of the probe is known (circumference of ring or length of plate) the force measured can be used to calculate the interfacial or surface tension. A further requirement is that the probe must have a very high surface energy. This is why a platinum-iridium alloy is used for the ring and roughened platinum for the plate.

The liquid is raised until contact with the surface is registered. The sample is then lowered again so that the liquid film produced beneath the ring is stretched. As the film is stretched a maximum force is experienced; this is recorded in the measurement. At the maximum the force vector is exactly parallel to the direction of motion; at this moment the contact angle θ is 0°. In practice the distance is first increased until the area of maximum force has been passed through. The sample vessel containing the liquid is then moved back so that the maximum point is passed through a second time. The maximum force is only determined exactly on this return movement and used to calculate the tension. The calculation is made according to the following equation:

$$\sigma = \frac{F_{max} - F_V}{L \cdot \cos\theta}$$

($\sigma$=surface or interfacial tension; *Fmax*=maximum force; $F_V$=weight of volume of liquid lifted; *L*=wetted length, $\theta$=contact angle)

The contact angle $\theta$ decreases as the extension increases and has the value 0° at the point of maximum force, this means that the term cos $\theta$ has the value 1.

The Kauri butanol value of the isosorbide esters produced is given in Table 4.

**Table 4.**

| | 1 | 2 | 3 | 4 | 5 |
|---|---|---|---|---|---|
| Kb value (ASTM D1133) | 137.9 | 127.7 | 96.1 | 89.2 | 25.8 |

Having now fully described this invention, it will be appreciated by those skilled in the art that the invention can be performed within a wide range of parameters within what is claimed, without departing from the scope of the invention, as defined by the claims.

## Claims

1. A liquid offset printing composition vehicle comprising a solvent composition, which solvent composition comprises at least one ester of a polyhydric alcohol with at least one carboxylic acid, **characterised in that** the solvent composition comprises at least 50 wt. % of a monomeric ester of isosorbide as a polyhydric alcohol with at least one carboxylic acid having a hydrocarbon chain containing from 4 up to 26 carbon atoms as a component of the solvent composition.

2. An offset printing composition vehicle according to claim 1, wherein the solvent composition mainly consist of one or more esters of a polyhydric alcohol with at least one carboxylic acid.

3. The offset printing composition vehicle according to claim 1 or 2, wherein the hydrocarbon chain of the carboxylic acid is a saturated alkyl chain or an alkenyl chain which contains one or more unsaturated bonds or a hydrocarbon chain containing one or more aromatic substituents.

4. The offset printing composition vehicle according to any of the previous claims wherein the carboxylic acid comprises a straight chain or branched hydrocarbon chain, in particular a branched hydrocarbon chain.

5. The offset printing composition vehicle according to claim 4 wherein the carboxylic acid is selected from the group of cekanoic acids and neoacids.

6. The offset printing composition vehicle according to any of claims 1-4, wherein the carboxylic acid is a fatty acid having a hydrocarbon chain containing from 4 up to 26 carbon atoms.

7. The offset printing composition vehicle according to any of the previous claims wherein the average degree of esterification of the polyol moieties in the isosorbide ester is in the range of 1.00 and 2.00, preferably in the range of 1.50-1.99, more preferably in the range of 1.60-1.98, even more preferably in the range of 1.70-1.97, and yet more preferably in the range of 1.75 -1.95.

8. The offset printing composition vehicle according to any one of the preceding claims wherein the dynamic viscosity at 25°C of the isosorbide ester is in the range of 20-600 mPa.s, preferably at least 40 mPa.s, optionally at most 400 mPa.s, preferably at most 300 mPa.s, more preferably at most 200 mPa.s and even more preferably at most 100 mPa.s.

9. The offset printing composition vehicle according to any one of the preceding claims wherein the isosorbide ester has a Kauri-butanol value of at least 25, preferably at least 50, more preferably at least 60, even more preferably at least 70, yet more preferably at least 80, and optionally at most 170, preferably at most 160, more preferably at most 150 and even more preferably at most 140.

10. The offset printing composition vehicle according to any one of the preceding claims, wherein the carboxylic acid is a saturated carboxylic acid, and if the carboxylic acid is a mixture of two or more different carboxylic acids whereby

at least 90 wt.% of the carboxylic acids in the mixture are saturated carboxylic acids, preferably at least 95 wt.%, more preferably at least 99 wt.%.

**11.** The offset printing composition vehicle according to any one of claims 6-10, wherein the fatty acid is a straight chain fatty acid, and if the fatty acid is a mixture of two or more different fatty acids at least 90 wt.% of the fatty acids in the mixture are straight chain fatty acids, preferably at least 95 wt.%, more preferably at least 99 wt.%.

**12.** The offset printing composition vehicle according to any one of claims 6-11, wherein the fatty acid is a mixture of fatty acids, which mixture comprises at least 75 wt.% of fatty acids having from 5 up to 11 carbon atoms in their hydrocarbon chain, more preferably at least 85 wt.%, even more preferably at least 90.0 wt.%, yet more preferably at least 95.0 wt.%.

**13.** The offset printing composition vehicle according to any one of claims 6-12, wherein the fatty acid is a mixture in which the content of fatty acids having from 11 up to 21 carbon atoms in the hydrocarbon chain is preferably at most 15 wt.%, more preferably at most 10.0 wt.%, even more preferably at most 5.0 wt.%, yet more preferably at most 3.0 wt.%.

**14.** The offset printing composition vehicle according to any one of the claims 6-12, wherein the fatty acid is a mixture of which the content of fatty acids having from 11 up to 17 carbon atoms in the hydrocarbon chain is at most 5.0 wt.%, preferably at most 3.0 wt.%.

**15.** An offset printing ink composition comprising the offset printing composition vehicle according to any one of the previous claims, and further at least one resin binding agent and one or more pigments.

**16.** An offset printing varnish composition comprising the offset printing composition vehicle according to any one of claims 1-14, and a resin binding agent.

**17.** Use of the offset printing composition vehicle according to any one of claims 1-14 for controlling the migration of a printing ink composition into a substrate onto which the printing ink composition is being applied in an offset printing process.

**18.** A method for producing an offset printing composition vehicle, wherein use is made of a solvent composition which comprises at least 50 wt. % of a monomeric ester of isosorbide as a polyhydric alcohol with at least one carboxylic acid having a hydrocarbon chain containing from 4 up to 26 carbon atoms as a component of the solvent composition

**19.** The use of the offset printing composition vehicle according to any one of claims 1-14 for the preparation of an offset printing ink or an offset printing varnish composition suitable for use with food packaging, preferably with primary food packaging.

**Patentansprüche**

**1.** Flüssige Offsetdruckzusammensetzungsträgersubstanz, umfassend eine Lösungsmittelzusammensetzung, wobei die Lösungsmittelzusammensetzung wenigstens einen Ester eines mehrwertigen Alkohols mit wenigstens einer Carbonsäure umfasst, **dadurch gekennzeichnet, dass** die Lösungsmittelzusammensetzung wenigstens 50 Gew.-% eines monomeren Isosorbidesters als einen mehrwertigen Alkohol mit wenigstens einer Carbonsäure mit einer Kohlenwasserstoffkette enthaltend von 4 bis zu 26 Kohlenstoffatome als eine Komponente der Lösungsmittelzusammensetzung umfasst.

**2.** Offsetdruckzusammensetzungsträgersubstanz nach Anspruch 1, wobei die Lösungsmittelzusammensetzung hauptsächlich aus einem oder mehreren Estern eines mehrwertigen Alkohols mit wenigstens einer Carbonsäure besteht.

**3.** Offsetdruckzusammensetzungsträgersubstanz nach Anspruch 1 oder 2, wobei die Kohlenwasserstoffkette der Carbonsäure eine gesättigte Alkylkette oder eine Alkenylkette ist, die eine oder mehrere ungesättigte Bindungen oder eine Kohlenwasserstoffkette, enthaltend einen oder mehrere aromatische Substituenten, enthält.

**4.** Offsetdruckzusammensetzungsträgersubstanz nach einem der vorhergehenden Ansprüche, wobei die Carbonsäure

eine gerade Kette oder verzweigte Kohlenwasserstoffkette, insbesondere eine verzweigte Kohlenwasserstoffkette, umfasst.

5. Offsetdruckzusammensetzungsträgersubstanz nach Anspruch 4, wobei die Carbonsäure ausgewählt ist aus der Gruppe von Cekansäuren und Neosäuren.

6. Offsetdruckzusammensetzungsträgersubstanz nach einem der Ansprüche 1 - 4, wobei die Carbonsäure eine Fettsäure mit einer Kohlenwasserstoffkette, enthaltend von 4 bis zu 26 Kohlenstoffatome, ist.

7. Offsetdruckzusammensetzungsträgersubstanz nach einem der vorhergehenden Ansprüche, wobei der durchschnittliche Veresterungsgrad der Polyolteile in dem Isosorbidester in dem Bereich von 1,00 und 2,00, vorzugsweise in dem Bereich von 1,50 - 1,99, bevorzugter in dem Bereich von 1,60 - 1,98, noch bevorzugter in dem Bereich von 1,70 - 1,97, und sogar noch bevorzugter in dem Bereich von 1,75 - 1,95 ist.

8. Offsetdruckzusammensetzungsträgersubstanz nach einem der vorhergehenden Ansprüche, wobei die dynamische Viskosität bei 25°C des Isosorbidesters in dem Bereich von 20 - 600 mPa.s, vorzugsweise wenigstens 40 mPa.s, optional höchstens 400 mPa.s, vorzugsweise höchstens 300 mPa.s, bevorzugter höchstens 200 mPa.s und noch bevorzugter höchstens 100 mPa.s. ist.

9. Offsetdruckzusammensetzungsträgersubstanz nach einem der vorhergehenden Ansprüche, wobei der Isosorbidester einen Kauri-Butanol-Wert von wenigstens 25, vorzugsweise wenigstens 50, bevorzugter wenigstens 60, noch bevorzugter wenigstens 70, noch bevorzugter wenigstens 80, und optional höchstens 170, vorzugsweise höchstens 160, bevorzugter höchstens 150 und noch bevorzugter höchstens 140 hat.

10. Offsetdruckzusammensetzungsträgersubstanz nach einem der vorhergehenden Ansprüche, wobei die Carbonsäure eine gesättigte Carbonsäure ist, und wenn die Carbonsäure ein Gemisch aus zwei oder mehr verschiedenen Carbonsäuren ist, wobei wenigstens 90 Gew.-% der Carbonsäuren in dem Gemisch gesättigte Carbonsäuren sind, vorzugsweise wenigstens 95 Gew.-%, bevorzugter wenigstens 99 Gew.-%.

11. Offsetdruckzusammensetzungsträgersubstanz nach einem der Ansprüche 6 - 10, wobei die Fettsäure eine geradkettige Fettsäure ist, und wenn die Fettsäure ein Gemisch aus zwei oder mehr verschiedenen Fettsäuren ist, wenigstens 90 Gew.-% der Fettsäuren in dem Gemisch geradkettige Fettsäuren sind, vorzugsweise wenigstens 95 Gew.-%, bevorzugter wenigstens 99 Gew.-%.

12. Offsetdruckzusammensetzungsträgersubstanz nach einem der Ansprüche 6 - 11, wobei die Fettsäure ein Gemisch aus Fettsäuren ist, wobei das Gemisch wenigstens 75 Gew.-% Fettsäuren mit von 5 bis zu 11 Kohlenstoffatomen in ihrer Kohlenwasserstoffkette umfasst, bevorzugter wenigstens 85 Gew.-%, noch bevorzugter wenigstens 90,0 Gew.-%, sogar noch bevorzugter wenigstens 95,0 Gew.-%.

13. Offsetdruckzusammensetzungsträgersubstanz nach einem der Ansprüche 6 - 12, wobei die Fettsäure ein Gemisch ist, in dem der Gehalt an Fettsäuren mit von 11 bis zu 21 Kohlenstoffatomen in der Kohlenwasserstoffkette vorzugsweise höchstens 15 Gew.-%, bevorzugter höchstens 10,0 Gew.-%, noch bevorzugter höchstens 5,0 Gew.-%, sogar noch bevorzugter höchstens 3,0 Gew.-% ist.

14. Offsetdruckzusammensetzungsträgersubstanz nach einem der Ansprüche 6 - 12, wobei die Fettsäure ein Gemisch ist, von dem der Gehalt von Fettsäuren mit von 11 bis zu 17 Kohlenstoffatomen in der Kohlenwasserstoffkette höchstens 5,0 Gew.-%, vorzugsweise höchstens 3,0 Gew.-% ist.

15. Offsetdrucktintenzusammensetzung, umfassend die Offsetdruckzusammensetzungsträgersubstanz nach einem der vorhergehenden Ansprüche, und ferner wenigstens ein Harzbindemittel und ein oder mehrere Pigmente.

16. Offsetdrucklackzusammensetzung, umfassend die Offsetdruckzusammensetzungsträgersubstanz nach einem der Ansprüche 1 - 14, und ein Harzbindemittel.

17. Verwendung der Offsetdruckzusammensetzungsträgersubstanz nach einem der Ansprüche 1 - 14 zum Steuern der Migration einer Drucktintenzusammensetzung in ein Substrat, auf das die Drucktintenzusammensetzung in einem Offsetdruckverfahren aufgebracht wird.

**18.** Verfahren zum Herstellen einer Offsetdruckzusammensetzungsträgersubstanz, wobei Verwendung von einer Lösungsmittelzusammensetzung gemacht wird, die wenigstens 50 Gew.-% eines monomeren Isosorbidesters als einen mehrwertigen Alkohol mit wenigstens einer Carbonsäure mit einer Kohlenwasserstoffkette, enthaltend von 4 bis zu 26 Kohlenstoffatome als eine Komponente der Lösungsmittelzusammensetzung, umfasst.

**19.** Verwendung der Offsetdruckzusammensetzungsträgersubstanz, nach einem der Ansprüche 1 - 14 für die Herstellung einer Offsetdrucktinte oder einer Offsetdrucklackzusammensetzung, geeignet zur Verwendung mit Lebensmittelverpackung, vorzugsweise mit primärer Lebensmittelverpackung.

**Revendications**

**1.** Véhicule liquide de composition d'impression offset comprenant une composition de solvant, laquelle composition de solvant comprend au moins un ester d'un polyol avec au moins un acide carboxylique, **caractérisé en ce que** la composition de solvant comprend au moins 50 % en poids d'un ester monomère d'isosorbide en tant que polyol avec au moins un acide carboxylique ayant une chaîne hydrocarbonée contenant de 4 jusqu'à 26 atomes de carbone en tant que composant de la composition de solvant.

**2.** Véhicule liquide de composition d'impression offset selon la revendication 1, dans lequel la composition de solvant est principalement constituée d'un ou plusieurs esters d'un polyol avec au moins un acide carboxylique.

**3.** Véhicule liquide de composition d'impression offset selon la revendication 1 ou 2, dans lequel la chaîne hydrocarbonée de l'acide carboxylique est une chaîne alkyle saturée ou une chaîne alcényle qui contient une ou plusieurs liaisons insaturées ou une chaîne hydrocarbonée contenant un ou plusieurs substituants aromatiques.

**4.** Véhicule liquide de composition d'impression offset selon l'une quelconque des revendications précédentes dans lequel l'acide carboxylique comprend une chaîne linéaire ou une chaîne hydrocarbonée ramifiée, en particulier une chaîne hydrocarbonée ramifiée.

**5.** Véhicule liquide de composition d'impression offset selon la revendication 4, dans lequel l'acide carboxylique est choisi dans le groupe des acides cékanoïques et des néoacides.

**6.** Véhicule liquide de composition d'impression offset selon l'une quelconque des revendications précédentes 1 à 4, dans lequel l'acide carboxylique est un acide gras ayant une chaîne hydrocarbonée contenant de 4 jusqu'à 26 atomes de carbone.

**7.** Véhicule liquide de composition d'impression selon l'une quelconque des revendications précédentes dans lequel le degré moyen d'estérification des fragments polyol de l'ester isosorbide est compris dans la plage allant de 1,00 à 2,00, de préférence dans la plage allant de 1,50 à 1,99, plus préférablement dans la plage allant de 1,60 à 1,98, encore plus préférablement dans la plage allant de 1,70 à 1,97, et encore plus préférablement dans la plage allant de 1,75 à 1,95.

**8.** Véhicule liquide de composition d'impression offset selon l'une quelconque des revendications précédentes dans lequel la viscosité dynamique à 25 °C de l'ester d'isosorbide est comprise dans la plage allant de 20 à 600 mPa.s, de préférence d'au moins 40 mPa.s, éventuellement d'au plus 400 mPa.s, de préférence d'au plus 300 mPa.s, plus préférablement d'au plus 200 mPa.s et encore plus préférablement d'au plus 100 mPa.s.

**9.** Véhicule liquide de composition d'impression offset selon l'une quelconque des revendications précédentes dans lequel l'ester d'isosorbide a un indice Kauri-butanol d'au moins 25, de préférence d'au moins 50, plus préférablement d'au moins 60, encore plus préférablement d'au moins 70, encore plus préférablement d'au moins 80, et éventuellement d'au plus 170, de préférence d'au plus 160, plus préférablement d'au plus 150 et encore plus préférablement d'au plus 140.

**10.** Véhicule liquide de composition d'impression offset selon l'une quelconque des revendications précédentes dans lequel l'acide carboxylique est un acide carboxylique saturé et si l'acide carboxylique est un mélange de deux acides carboxyliques différents ou plus par lequel au moins 90 % en poids des acides carboxyliques dans le mélange sont des acides carboxyliques saturés, de préférence au moins 95 % en poids, plus préférablement au moins 99 % en poids.

**11.** Véhicule liquide de composition d'impression offset selon l'une quelconque des revendications 6 à 10, dans lequel l'acide gras est un acide gras à chaîne linéaire et si l'acide gras est un mélange de deux acides gras différents ou plus, au moins 90 % en poids des acides gras dans le mélange sont des acides gras à chaîne linéaire, de préférence au moins 95 % en poids, plus préférablement au moins 99 % en poids.

**12.** Véhicule liquide de composition d'impression offset selon l'une quelconque des revendications 6 à 11, dans lequel l'acide gras est un mélange d'acides gras, lequel mélange comprend au moins 75 % en poids d'acides gras ayant de 5 jusqu'à 11 atomes de carbone dans leur chaîne hydrocarbonée, plus préférablement au moins 85 % en poids, encore plus préférablement au moins 90,0 % en poids, encore plus préférablement au moins 95,0 % en poids.

**13.** Véhicule liquide de composition d'impression offset selon l'une quelconque des revendications 6 à 12, dans lequel l'acide gras est un mélange dans lequel la teneur en acides gras ayant de 11 jusqu'à 21 atomes de carbone dans la chaîne hydrocarbonée est de préférence d'au plus 15 % en poids, plus préférablement d'au plus 10,0 % en poids, encore plus préférablement d'au plus 5,0 % en poids, encore plus préférablement d'au plus 3,0 % en poids.

**14.** Véhicule liquide de composition d'impression offset selon l'une quelconque des revendications 6 à 12, dans lequel l'acide gras est un mélange dans lequel la teneur en acides gras ayant de 11 jusqu'à 17 atomes de carbone dans la chaîne hydrocarbonée est d'au plus 15 % en poids, de préférence d'au plus 3,0 % en poids.

**15.** Composition d'encre d'impression offset comprenant le véhicule de composition d'impression offset selon l'une quelconque des revendications précédentes, et en outre au moins un agent de liaison de résine et un ou plusieurs pigments.

**16.** Composition de vernis d'impression offset comprenant le véhicule de composition d'impression offset selon l'une quelconque des revendications 1 à 14 et un agent de liaison de résine.

**17.** Utilisation du véhicule de la composition d'impression offset selon l'une quelconque des revendications 1 à 14 pour réguler la migration d'une composition d'encre d'impression dans un substrat sur lequel la composition d'encre d'impression est appliquée dans un procédé d'impression offset.

**18.** Procédé de production d'un véhicule de la composition d'impression offset, dans lequel on utilise une composition de solvant qui comprend au moins 50 % en poids d'un ester monomère d'isosorbide en tant que polyol avec au moins un acide carboxylique ayant une chaîne hydrocarbonée contenant de 4 jusqu'à 26 atomes de carbone en tant que composant de la composition de solvant.

**19.** Utilisation du véhicule de la composition d'impression offset selon l'une quelconque des revendications 1 à 14 pour la préparation d'une encre d'impression offset ou d'une composition de vernis d'impression offset appropriée pour une utilisation avec un conditionnement d'aliments, de préférence avec un conditionnement primaire d'aliments.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20120276477 A
- US 20110315049 A
- US 20130032056 A
- US 20130032057 A
- WO 201212367 A
- US 6613813 B
- US 20100184896 A
- WO 2008024968 A
- WO 2013017261 A1
- WO 2013017257 A1
- WO 2013017255 A1
- WO 2013017256 A1


### Non-patent literature cited in the description


- *CHEMICAL ABSTRACTS,* 652-67-5
- *CHEMICAL ABSTRACTS,* 64742-47-8, 1330-20-3, 108-88-3, 5989-27-5, 67784-809